# EUROPEAN PATENT SPECIFICATION

(11) **EP 0 554 791 B1**
(45) Date of publication and mention of the grant of the patent: **20.03.1996**
(21) Application number: 93101299.1
(22) Date of filing: 28.01.1993
(51) Int. Cl.: F04B 27/08, F04B 39/02, F16C 33/66

(54) **Wobble plate type refrigerant compressor**
Taumelscheiben-Kältemittelverdichter
Compresseur de réfrigérant de type à plateau oscillant

(30) Priority: 29.01.1992 JP 2773/92 U
(43) Date of publication of application: 11.08.1993
(73) Proprietor: SANDEN CORPORATION, Isesaki-shi Gunma, 372 (JP)
(72) Inventor: Kawahara, Takayuki, c/o Sanden Corporation, Isesaki-shi, Gunma, 372 (JP)
(74) Representative: Prüfer, Lutz H.

(56) References cited:
- CH-A- 165 231
- DE-A- 2 544 685
- JP-A- 5 951 174
- US-A- 2 236 481
- US-A- 3 253 869
- US-A- 3 712 759
- PATENT ABSTRACTS OF JAPAN, unexamined applications, M field, vol. 1, no. 134, November 05, 1977 THE PATENT OFFICE JAPANESE GOVERNMENT page 4701 M 77

## Description

This invention relates to a wobble plate type refrigerant compressor as indicated in the generic part of claim 1 and which is known from Patent Abstracts of Japan, Vol. 1, No. 134 (page 4701 477), 05.11.1977. More particularly, it relates to a lubricating mechanism provided at a radial needle bearing, which rotatably supports a drive shaft in the center of a front end plate.

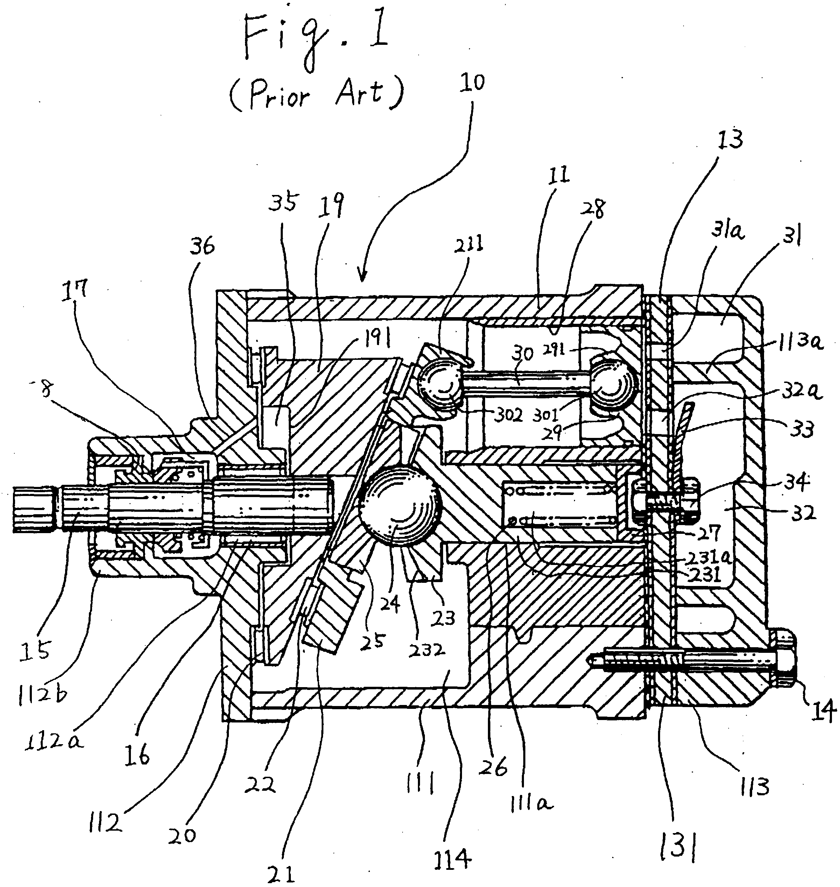

As shown in FIG.1, a wobble plate type refrigerant compressor having a lubricating mechanism provided at a radial needle bearing, which rotatably supports a drive shaft in the center of a front end plate is generally known.

Referring to FIG.1, a wobble plate type refrigerant compressor 10 comprises cylindrical housing 11. Cylindrical housing 11 includes cylinder block 111, front end plate 112 and cylinder head 113. The interior of housing 11 defines a crank chamber 114 between cylinder block 111 and front end plate 112 which is mounted on the left end portion of cylinder block 111 by a plurality of bolts (not shown). Cylinder head 113 together with valve plate assembly 13 are mounted on the right end portion of a cylinder block 111 by a plurality of bolts 14. Opening 112a is centrally formed in a front end plate 112 and drive shaft 15 is rotatably supported by a bearing, such as a radial needle bearing 16 disposed in opening 112a. Front end plate 112 includes annular sleeve portion 112b projecting from the front surface thereof. Annular sleeve projection 112b surrounds drive shaft 15 to define a shaft seal chamber 17 in which a shaft seal element 18 is disposed.

Drive shaft 15 is attached to a cam rotor 19 at its inner end by any suitable means so that cam rotor 19 is rotated along with drive shaft 15. Cam rotor 19 is supported on an inner surface of front end plate 112 by means of a bearing, such as a thrust needle 20 disposed at the inner surface of front end plate 112. Wobble plate 21 is disposed on inclined surface of cam rotor 19 through thrust needle bearing 22.

Supporting member 23, including shank portion 231 having an axial hole 231a formed therein, is axially slidable and non-rotatably supported within cylinder block 111 by the insertion of shank portion 231 into axial hole 111a formed in a cylinder block 111. The rotation of supporting member 23 is prevented by means of a key means and key groove (not shown). Supporting member 23 further includes bevel gear portion 232 at the end of shank portion 231. Bevel gear portion 232 includes a seat for steel ball 24 at the center thereof. Bevel gear portion 232 of supporting member 23 engages with bevel gear 25 mounted on wobble plate 21. Steel ball 24 is also positioned in a seat formed at the central portion of bevel gear 25, thereby allowing wobble plate 21 to be mutably, but not rotatably, supported on steel ball 24. Coil spring 26 is disposed in axial hole 231a of supporting member 231 and the outer end of spring 26 is in contact with screw member 27, thereby urging supporting member 23 toward a wobble plate 21.

Cylinder block 111 is provided with a plurality of axial cylinders 28 formed therein, within which pistons 29 are slide and closely fitted. Each piston 29 is connected to wobble plate 21 through a piston rod 30 made of steel. Ball 301 at one end of rod 30 is firmly received in socket 291 of piston 29 by caulking an edge of socket 291, and ball 302 at the other end of rod 30 is firmly received in socket 211 of wobble plate 21 by caulking an edge of socket 211. Balls 301 and 302 slide along an inner spherical surface of sockets 291 and 211, respectively. It should be understood that, although only one ball-and-socket joint is shown in the drawing, there are plurality of sockets arranged peripherally around wobble plate 21 is formed with a socket for receiving the other ball of rods 30.

Cylinder head 113 is provided with suction chamber 31 and discharge chamber 32, separated by partition wall 113a. Valve plate assembly 13 includes valve plate 131 having suction ports 31a connecting suction chamber 31 with cylinders 28 and discharge ports 32a connecting discharge chamber 32 with cylinders 28. Valve plate assembly 13 further includes a suction reed valve (not shown), provided at each of suction ports 31a, and discharge reed valve (not shown), provided at each of discharge ports 32a. Additionally, a circular gasket (not shown) and an annular gasket (not shown) are provided to seal the mating surface of cylinder block 111, valve plate 131 and cylinder head 113. Stopper plate 33 suppresses excessive deformation of a discharge reed valve, and stopper plate 33 to valve plate 131. Bolt and nut device 34 secures the circular gasket, suction reed valve, discharge reed valve, and stopper plate 33 to valve plate 131.

In operation of the compressor, drive shaft 15 is driven by any suitable driving source, such as an automobile engine. Cam rotor 19 rotates with drive shaft 15, so that wobble plate 21 may mutate about steel ball 24 according to the rotation of inclined surface of cam rotor 19. The notation of wobble plate 21 causes the reciprocation of each respective piston 29. Therefore, the successive strokes of suction, compression evacuation of the refrigerant gas are repeatedly performed in each cylinder 28. The refrigerant gas circulated through a cooling is sucked into suction chamber 31 and is discharged from discharge chamber 32.

The above compressor is provided with a lubricating mechanism provided at a radial needle bearing 16.

While the compressor operates, the part of the refrigerant gas in each cylinder 28 passes into crank chamber 114 as blow-by gas through a gap between an inner wall of cylinder 28 and piston 29. In order to return the blow-by gas to suction chamber 31, a passageway (not shown) which is a so called balance hole is formed in cylinder block 111 and through valve plate assembly 13 to communicate between crank chamber 114 and suction chamber 31. In crank chamber 114, lubricating oil is held which is agitated and splashed during operation of the compressor and it lubricates the internal moving parts in the form of an oil mist. Part of the oil mist in crank chamber 114 flows to suction chamber 31 together with the returning refrigerant gas through the balance hole and the mist is sucked into respective cylinders 28 to lubricate the gap between pistons 30 and the inner wall of cylinders 28.

Cam rotor 19 is provided with a concave portion 191 on the front surface thereof, which forms circular space 35 between front end plate 112 and cam rotor 19. Front end plate 112 is provided with an oil passageway 36 which communicates between space 35 and shaft seal chamber 17. Accordingly, oil flowing along the inner surface of housing 11 flows into space 35 through the gap between thrust needle 20 and front end plate 112, and then flows into shaft seal chamber 17 through oil passageway 36. The lubricating oil in shaft seal chamber 17 flows into the gap between radial needle bearing 16 and drive shaft 15 through the front end of needle bearing 16, and flows into space 35 out of rear end of needle bearing 16. Therefore, lubricating oil lubricates needle bearing 16.

However, as space 35 is surrounded by cam rotor 19 and lubricating oil flowing into space 35 passes through the gap between front end plate 112 and cam rotor 19, oil flowing into shaft seal chamber 17 is small in quantity. Moreover, as part of oil flowing into shaft seal chamber 17 accumulates in shaft seal chamber 17, oil lubricating needle bearing 16 diminish in quantity. As a result, the flaking and the breakage of drive shaft 15 easily occur by reason of the deficiency of lubricating oil.

From US-A-3,712,759 a wobble plate type refrigerant compressor according to the generic portion of claim 1 is known. This compressor comprises a duct connecting a shaft seal chamber with a space interior to the rotor member. A further duct connects the outside of the cylindrical race with the same space.

From JP-A-52-76714 a wobble plate type refrigerant compressor is known wherein the above-mentioned shaft seal chamber is connected by a duct with the crank chamber outside the rotor element.

From the DE-A-25 44 685 a wobble plate type refrigerant compressor is known wherein also a duct is provided which connects the above-mentioned shaft seal chamber with the crank chamber outside the rotor element.

The US-A-2,236,481 discloses a self-contained roller bearing wherein in the outside circumference of a cylindrical race a groove is supplied and a hole connecting the groove with the inside of the cylindrical race.

The US-A-3,253,869 discloses a drawn shell roller bearing wherein a hole is provided in the outer cylindrical race.

The Swiss Patent 165 231 discloses a needle bearing wherein a radial hole is provided.

Therefore, it is an object of the present invention to provide a wobble plate type refrigerant compressor having a lubricating mechanism which can sufficiently supply the suspended lubricating oil in a crank chamber to a friction surface between a drive shaft and a radial needle bearing to prevent the abrasion and the flaking and the breakage of the drive shaft.

This object is solved by a wobble plate type refrigerant compressor having the features of claim 1.

Preferred embodiments of the present invention are specified in the subclaims.

### BRIEF DESCRIPTION OF THE DRAWINGS

FIG.1 is a vertical longitudinal sectional view of a wobble plate type refrigerant compressor in accordance with the prior art.

FIG.2 is a vertical longitudinal sectional view of a wobble plate type refrigerant compressor in accordance with the first embodiment of this invention.

FIG.3 is an enlarged partially cross-sectional view of a lubricating mechanism provided at a radial needle bearing of wobble plate type refrigerant compressor shown in FIG.2.

FIG.4 is a vertical longitudinal sectional view of a wobble plate type refrigerant compressor in accordance with the second embodiment of this invention.

FIG.5 is an enlarged partially cross-sectional view of a lubricating mechanism provided at a radial needle bearing of wobble plate type refrigerant compressor shown in FIG.4.

### DETAILED DESCRIPTION OF PREFERRED EMBODIMENTS

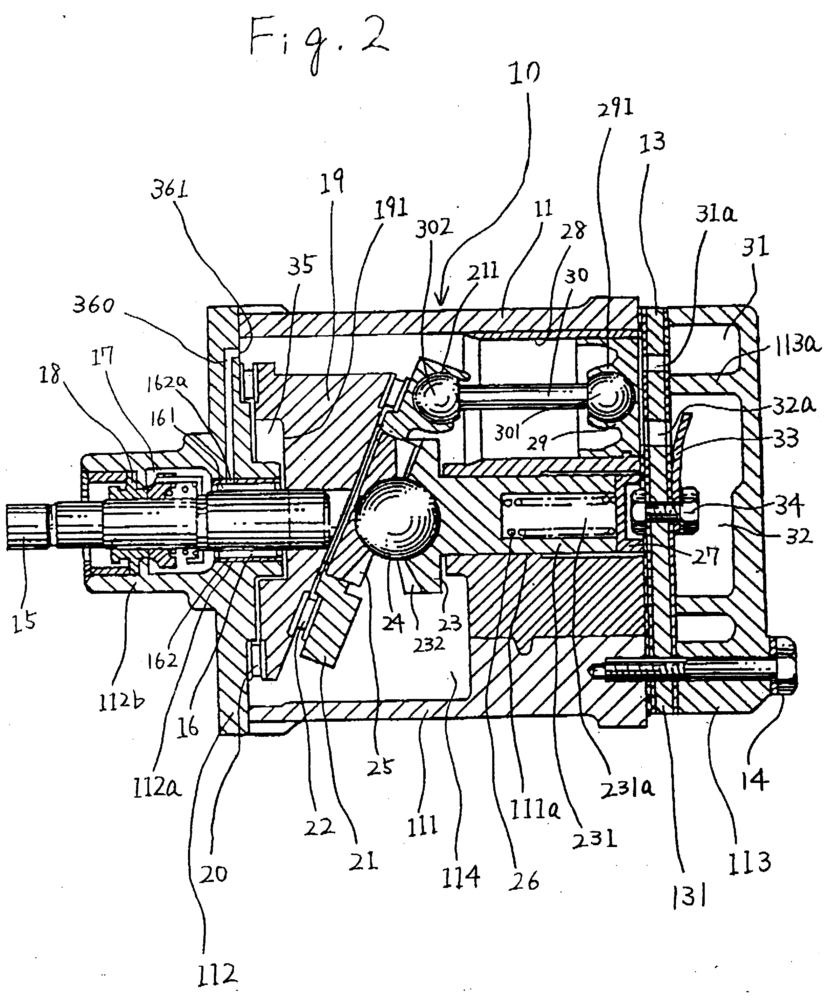

FIGS.2 - 3 illustrate the first embodiment of this invention. In these figures, the same numerals are used to denote corresponding elements shown in FIG.1.

Referring to FIG.2, a wobble plate type refrigerant compressor 10 comprises cylindrical housing 11. Cylindrical housing 11 includes cylinder block 111, front end plate 112 and cylinder head 113. The interior of housing 11 defines a crank chamber 114 between cylinder block 111 and front end plate 112 which is mounted on the left end portion of cylinder block 111 by a plurality of bolts (not shown). Cylinder head 113 together with valve plate assembly 13 are mounted on the right end portion of a cylinder block 111 by a plurality of bolts 14. Opening 112a is centrally formed in a front end plate 112 and drive shaft 15 is rotatably supported by a bearing, such as a radial needle bearing 16 disposed in opening 112a. Front end plate 112 includes annular sleeve portion 112b projecting from the front surface thereof. Annular sleeve projection 112b surrounds drive shaft 15 to define a shaft seal chamber 17 in which a shaft seal element 18 is disposed.

Drive shaft 15 is attached to a cam rotor 19 at its inner end by any suitable means so that cam rotor 19 is rotated along with drive shaft 15. Cam rotor 19 is supported on an inner surface of front end plate 112 by means of a bearing, such as thrust needle 20 disposed at the inner surface of front end plate 112. Wobble plate 21 is disposed on inclined surface of cam rotor 19 through thrust needle bearing 22.

Supporting member 23, including shank portion 231 having an axial hole 231a formed therein, is axially slidable and non-rotatably supported within cylinder block 111 by the insertion of shank portion 231 into axial hole 111a formed in a cylinder block 111. The rotation of supporting member 23 is prevented by means of a key means and key groove (not shown). Supporting member 23 further includes bevel gear portion 232 at the end of shank portion 231. Bevel gear portion 232 includes a seat for steel ball 24 at the center thereof. Bevel gear portion 232 of supporting member 23 engages with bevel gear 25 mounted on wobble plate 21. Steel ball 24 is also positioned in a seat formed at the central portion of bevel gear 25, thereby allowing wobble plate 21 to be nutatably, but not rotatably, supported on steel ball 24. Coil spring 26 is disposed in axial hole 231a of supporting member 231 and the outer end of spring 26 is in contact with screw member 27, thereby urging supporting member 23 toward wobble plate 21.

Cylinder block 111 is provided with a plurality of axial cylinders 28 formed therein, within which pistons 29 are slidably and closely fitted. Each piston 29 is connected to wobble plate 21 through a piston rod 30 made of steel. Ball 301 at one end of a piston 30 is firmly received in socket 291 of piston 29 by caulking an edge of socket 291, and ball 302 at the other end of piston rod 30 is firmly received in socket 211 of wobble plate 21 by caulking an edge of socket 211. Balls 301 and 302 slide along an inner spherical surface of sockets 291 and 211, respectively. It should be understood that, although only one ball-and-socket joint is shown in the drawing, there are plurality of sockets arranged peripherally around wobble plate 21 is formed with a socket for receiving the other ball of piston rods 30.

Cylinder head 113 is provided with suction chamber 31 and discharge chamber 32, separated by partition wall 113a. Valve plate assembly 13 includes valve plate 13 having suction ports 31a connecting suction chamber 31 with cylinders 28 and discharge ports 32a connecting discharge chamber 32 with cylinders 28. Valve plate assembly 13 further includes a suction reed valve (not shown), provided at each of suction ports 31a, and discharge reed valve (not shown), provided at each of discharge ports 32a. Additionally, a circular gasket (not shown) and an annular gasket (not shown) are provided to seal the mating surfaces of cylinder block 111, valve plate 131 and cylinder head 113. Stopper plate 33 suppresses excessive deformation of a discharge reed valve,and stopper plate 33 to valve plate 131. Bolt and nut device 34 secures the circular gasket, suction reed valve, discharge reed valve, and stopper plate 33 to valve plate 131.

In operation of the compressor, drive shaft 15 is driven by any suitable driving source, such as an automobile engine. Cam rotor 19 rotates with drive shaft 15, so that wobble plate 21 may nutate about steel ball 24 according to the rotation of inclined surface of cam rotor 19. The nutation of wobble plate 21 causes the reciprocation of each respective piston 29. Therefore, the successive strokes of suction, compression evacuation of the refrigerant gas are repeatedly performed in each cylinder 28. The refrigerant gas circulated through a cooling is sucked into suction chamber 31 and is discharged from discharge chamber 32.

The above compressor is provided with a lubricating mechanism provided at a radial needle bearing 16.

While the compressor operates, the part of the refrigerant gas in each cylinder 28 passes into crank chamber 114 as blow-by gas through a gap between an inner wall of cylinder 28 and piston 29. In order to return the blow-by gas to suction chamber 31, a passageway (not shown) which is a so called balance hole is formed in cylinder block 111 and through valve plate assembly 13 to communicate between crank chamber 114 and suction chamber 31. In crank chamber 114, lubricating oil is held which is agitated and splashed during operation of the compressor and it lubricates the internal moving parts in the form of an oil mist. Part of the oil mist in crank chamber 114 flows to suction chamber 31 together with the returning refrigerant gas through the balance hole and the mist is sucked into respective cylinders 28 to lubricate the gap between pistons 30 and the inner wall of cylinder 28.

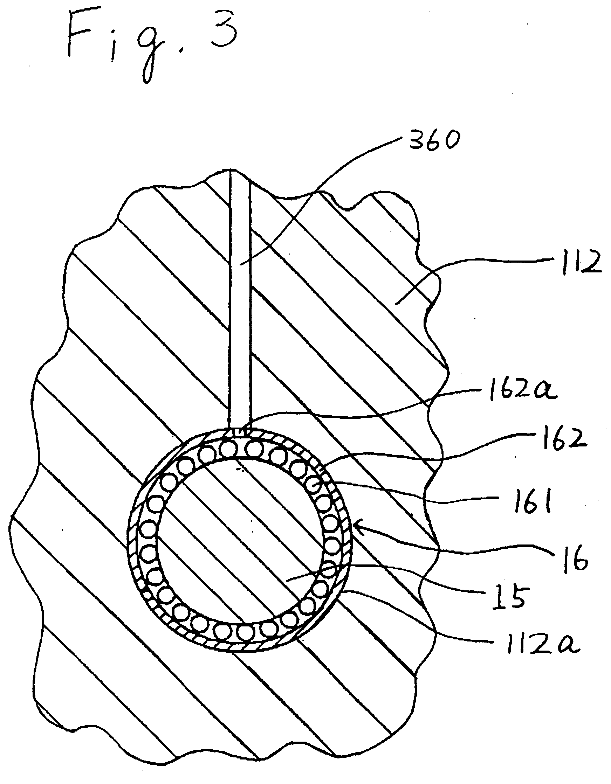

As particularly shown in FIG.3, a radial needle bearing 16 comprises a plurality of cylindrical rollers 161 arranged annularly and supporting the circumferential surface of drive shaft 15, and a cylindrical outer race 162 covering the circumference of rollers 161. Outer race 162 has a hole 162a on the top thereof in the condition that radial needle bearing 16 is disposed between drive shaft 15 and opening 112a. A hole 162a has fixed diameter being able to keep the strength of outer race 162 (For example, diameter of a hole 162a is 2mm in this embodiment.), and communicates with a passageway 360 formed within front end plate 112. Moreover, as drive shaft 15 radially adds the high load to the front and rear ends of radial needle bearing 16 under the influence of refrigerant gas compression force in operation of the compressor, hole 162a is formed on the circumferential surface of outer race 162 except nearly at the front and rear ends of outer race 162 to be able to keep the strength of outer race 162. On the other hand, as shown in FIG.2, an opening 361 of passageway 360 is disposed on the inner surface of front end plate 112 which faces the interior of crank chamber 114 outside of cam rotor 19. That is, the interior of radial needle bearing 16 communicates with the interior of crank chamber 114 outside of cam rotor 19 through hole 162a and passageway 360.

In the above construction, lubricating oil flowing along the inner surface of housing 11 flows into a passageway 360 through opening 361, and then flows into the interior of radial needle bearing 16 through passageway 360 and hole 162a. As a result, oil lubricates radial needle bearing 16. As an opening 361 of passageway 360 is disposed on the inner surface of front end plate 112 which faces the interior of crank chamber 114 outside of cam rotor 19 and oil flowing along the inner surface of housing 11 straightly flows into the interior of radial needle bearing 16 through passageway 360 and hole 162a, oil flows in enough quantity for lubricating radial needle bearing 16. Moreover, as oil equally extends all rollers 161 by the rotation of drive shaft 15, radial needle bearing 16 is sufficiently lubricated.

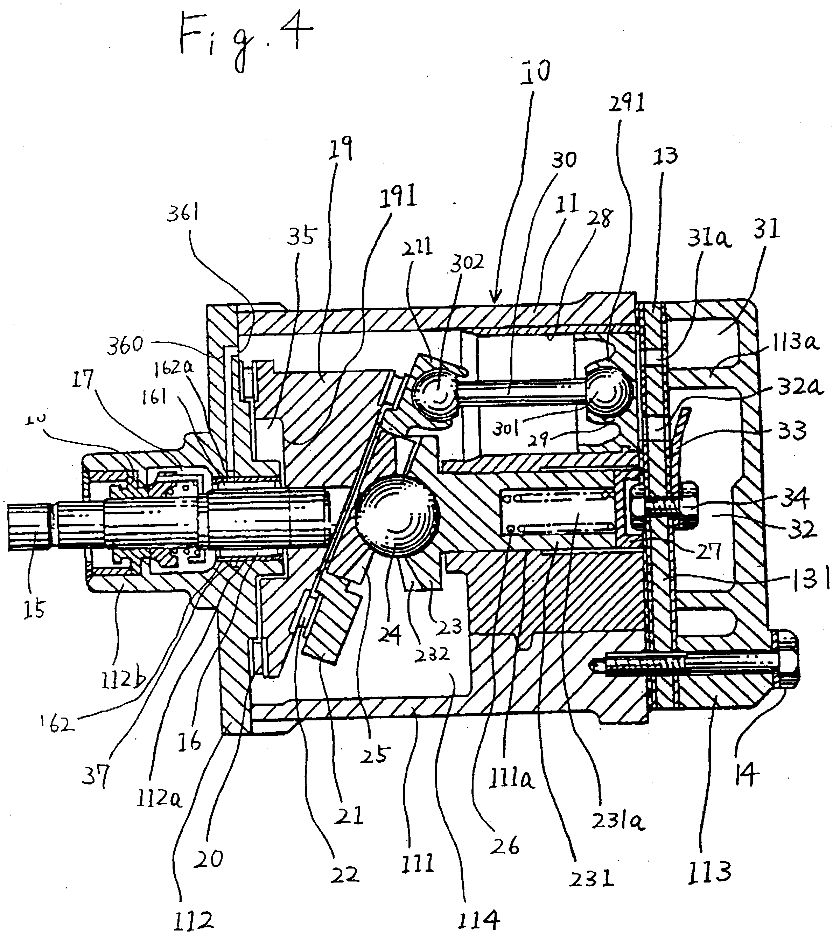

FIGS.4 - 5 illustrate the second embodiment of this invention. In these figures, the same numerals are used to denote corresponding elements shown in FIGS.1 - 3.

Referring to FIG.4, a wobble plate type refrigerant compressor 10 comprises cylindrical housing 11. Cylindrical housing 11 includes cylinder block 111, front end plate 112 and cylinder head 113. The interior of housing 11 defines a crank chamber 114 between cylinder block 111 and front end plate 112 which is mounted on the left end portion of cylinder block 111 by a plurality of bolts (not shown). Cylinder head 113 together with valve plate assembly 13 are mounted on the right end portion of a cylinder block 111 by a plurality of bolts 14. Opening 112a is centrally formed in a front end plate 112 and drive shaft 15 is rotatably supported by a bearing, such as a radial needle bearing 16 disposed in opening 112a. Front end plate 112 includes annular sleeve portion 112b projecting from the front surface thereof. Annular sleeve projection 112b surrounds drive shaft 15 to define a shaft seal chamber 17 in which a shaft seal element 18 is disposed.

Drive shaft 15 is attached to a cam rotor 19 at its inner end by any suitable means so that cam rotor 19 is rotated along with drive shaft 15. Cam rotor 19 is supported on an inner surface of front end plate 112 by means of bearing, such as thrust needle 20 disposed at the inner surface of front end plate 112. Wobble plate 21 is disposed on inclined surface of cam rotor 19 through thrust needle bearing 22.

Supporting member 23, including shank portion 231 having an axial hole 231a formed therein, is axially slidable and non-rotatably supported within cylinder block 111 by the insertion of shank portion 231 into axial hole 111a formed in a cylinder block 111. The rotation of supporting member 23 is prevented by means of a key means and key groove (not shown). Supporting member 23 further includes bevel gear portion 232 at the end of shank portion 231. Bevel gear portion 232 includes a seat for steel ball 24 at the center thereof. Bevel gear portion 232 of supporting member 23 engages with bevel gear 25 mounted on wobble plate 21. Steel ball 24 is also positioned in a seat formed at the central portion of bevel gear 25, thereby allowing wobble plate 21 to be nutatably, but not rotatably, supported on steel ball 24. Coil spring 26 is disposed in axial hole 231a of supporting member 231 and the outer end of spring 26 is in contact with screw member 27, thereby urging supporting member 23 toward wobble plate 21.

Cylinder block 111 is provided with a plurality of axial cylinders 28 formed therein, within which pistons 29 are slidably and closely fitted. Each piston 29 is connected to wobble plate 21 through a piston rod 30 made of steel. Ball 301 at one end of rod 30 is firmly received in socket 291 of piston 29 by caulking an edge of socket 291, and ball 302 at the other end of rod 30 is firmly received in socket 211 of wobble plate 21 by caulking an edge of socket 211. Balls 301 and 302 slide along an inner spherical surface of sockets 291 and 211, respectively. It should be understood that, although only one ball-and-socket joint is shown in the drawing, there are plurality of sockets arranged peripherally around wobble plate 21 is formed with a socket for receiving the other ball of rods 30.

Cylinder head 113 is provided with suction chamber 31 and discharge chamber 32, separated by partition wall 113a. Valve plate assembly 13 includes valve plate 131 having suction ports 31a connecting suction chamber 31 with cylinders 28 and discharge ports 32a connecting discharge chamber 32 with cylinders 28. Valve plate assembly 13 further includes a suction reed valve (not shown), provided at each of suction ports 31a, and discharge reed valve (not shown), provided at each of discharge ports 32a. Additionally, a circular gasket (not shown) and an annular gasket (not shown) are provided to seal the mating surfaces of cylinder block 111, valve plate 131 and cylinder head 113. Stopper plate 33 suppresses excessive deformation of a discharge reed valve, and stopper plate 33 to valve plate 131. Bolt and nut device 34 secures the circular gasket, suction reed valve, discharge reed valve, and stopper plate 33 to valve plate 131.

In operation of the compressor, drive shaft 15 is driven by any suitable driving source, such as an automobile engine. Cam rotor 19 rotates with drive shaft 15, so that wobble plate 21 may nutate about steel ball 24 according to the rotation of inclined surface of cam rotor 19. The nutation of wobble plate 21 causes the reciprocation of each respective piston 29. Therefore, the successive strokes of suction, compression evacuation of the refrigerant gas are repeatedly performed in each cylinder 28. The refrigerant gas circulated through a cooling is sucked into suction chamber 31 and is discharged from discharge chamber 32.

The above compressor is provided with a lubricating mechanism provided at a radial needle bearing 16.

While the compressor operates, the part of the refrigerant gas in each cylinder 28 passes into crank chamber 114 as blow-by gas through a gap between an inner wall of cylinder 28 and piston 29. In order to return the blow-by gas to suction chamber 31, a passageway (not shown) which is a so called balance hole is formed in cylinder block 111 and through valve plate assembly 13 to communicate between crank chamber 114 and suction chamber 31. In crank chamber 114, lubricating oil is held which is agitated and splashed during operation of the compressor and it lubricates the internal moving parts in the form of an oil mist. Part of the oil mist in crank chamber 114 flows to suction chamber 31 together with the returning refrigerant gas through the balance hole and the mist is sucked into respective cylinders 28 to lubricate the gap between pistons 30 and the inner wall of cylinders 28.

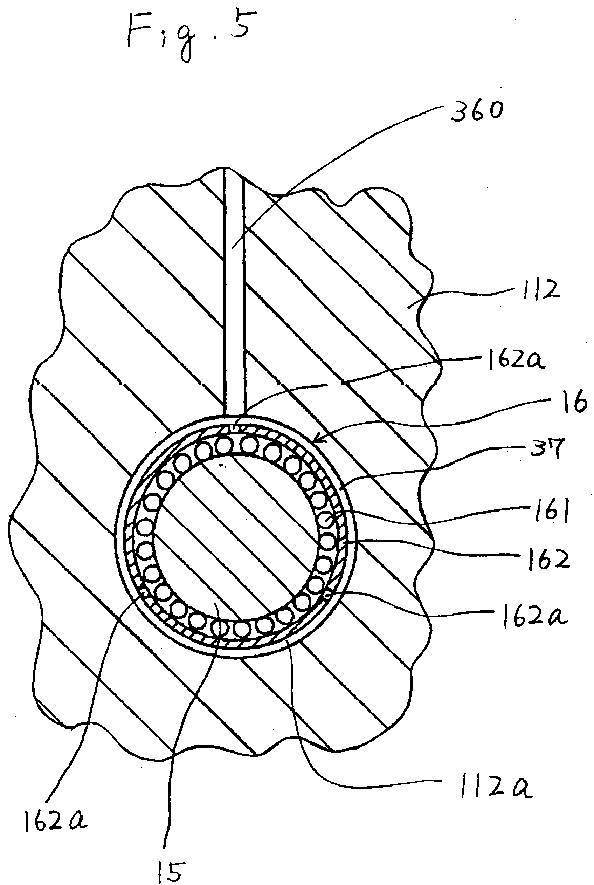

As particularly shown in FIG.5, a radial needle bearing 16 comprises a plurality of cylindrical rollers arranged annularly and supporting the circumferential surface of drive shaft 15, and a cylindrical outer race 162 covering the circumference of rollers 161. Outer race 162 has three holes 162a formed at equal distance on the circumference thereof. Holes 162a have fixed diameter being able to keep the strength of outer race 162, that is, in this embodiment, holes 162a have diameter of 2mm. Moreover, as drive shaft 15 radially adds the high load to the front and rear ends of radial needle bearing 16 under the influence of refrigerant gas compression force in operation of the compressor, hole 162a is formed on the circumferential surface of outer race 162 except at the front and rear ends of outer race 162 to be able to keep the strength of outer race 162. When radial needle bearing 16 is disposed in opening 112a, an annular space 37 between outer race 162 and an inner surface of opening 112a. Space 37 is formed by forming an annular groove 371 on the inner surface of opening 112a. The interior of radial needle bearing 16 communicates with an oil passageway 360 formed within front end plate 112 through holes 162a and space 37. On the other hand, as shown in FIG.4, an opening 361 of passageway 360 is disposed on the inner surface of front end plate 112 which faces the interior of crank chamber 114 outside of cam rotor 19. That is, the interior of radial needle bearing 16 communicates with the interior of crank chamber 114 outside of cam rotor 19 through holes 162a and space 37 and passageway 360. The width of groove 371 is fixed to prevent the occurrence of deformation and shank of radial needle bearing 16. That is, the width of groove 371 is almost as long as the diameter of holes 162a, or little longer than the diameter of holes 162a. In this embodiment, groove 371 has the width of 2mm.

In the above construction, lubricating oil flowing along the inner surface of housing 11 flows into a passageway 360 through opening 361, and the flows into the interior of space 37 through passageway 360. Oil within space 37 entirely extends on the circumference of outer race 162 by flowing along space 37, and then flows into the interior of radial needle bearing 16. As a result, oil lubricates radial needle bearing 16. As an opening 361 of passageway 360 is disposed on the inner surface of front end plate 112 which faces the interior of crank chamber 114 outside of cam rotor 19 and oil flowing along housing 11 straightly flows into the interior of radial needle bearing 16 through passageway 360 and space 37 and holes 162a, oil flows in enough quantity for lubricating radial needle bearing 16. And as oil equally extends all rollers 161 by the rotation of drive shaft 15, radial needle bearing 16 is sufficiently lubricated. Moreover, as oil extends on the circumference of outer race 162 by flowing along space 37, oil surely flows into the interior of radial needle bearing 16 even if holes 162a are disposed on wherever in the time assemble of radial needle bearing 16. Still more, three holes are formed on outer race 162 in this embodiment, however number of holes 162a don't care of any number.

## Claims

1. A wobble plate type refrigerant compressor (10) comprising:
a cylindrical housing (11) including a cylinder block (111),
a front end plate (112), and a cylinder head (113),
a crank chamber (114) defined by the interior of said housing (11) between said cylinder block (111) and said front end plate (112),
a plurality of cylinders (28) in which pistons (29) are respectively reciprocated by a wobble plate member (21),
said wobble plate member (21) adjacently disposed and relatively rotatably on an inclining surface of a rotor member (19) and driven by said rotor member (19),
said rotor member (19) secured on a shaft member (15),
said shaft member (15) rotatably supported in a first opening (112a) formed in the center of said front end plate (112) by a bearing means (16),
said bearing means (16) comprising a plurality of rolling elements (161) arranged annularly and a cylindrical race (162) covering the outer circumference of said rolling elements (161),
characterized by
at least one hole (162a) formed through said cylindrical race (162) except nearly at front and rear ends of the cylindrical race (162),
at least one passageway (360) having two ends and being formed within said front end plate (112), one end being
a second opening (361) disposed on the inner surface of said front end plate (112) which faces the interior of said crank chamber (114) outside of said rotor member (19), the other end being an opening within said first opening (112a) so as to link the passageway (360) directly to said at least one hole (162a).

2. The compressor (10) of claim 1 wherein said at least one hole (162a) is cylindrical.

3. The compressor (10) of claim 2 wherein a diameter of said at least one hole (162a) is 2 mm.

4. The compressor (10) of one of claims 1 to 3 wherein an annular spaced portion (37) is defined between an outer peripheral surface of said cylindrical race (162) and an inner peripheral surface of said opening (112a),
said at least one passageway (360) linking said second opening (361) to said annular spaced portion (37).

5. The compressor (10) of claim 4 wherein said annular spaced portion (37) is an annular groove (371) formed at the inner peripheral surface of said opening (112a).

6. The compressor (10) of claim 4 or 5 wherein a cross sectional view of said annular spaced portion (37) is rectangular.

7. The compressor (10) of claim 6 wherein a diameter of said at least one hole (162a) is substantially equal to the width of said annular spaced portion (37).

8. The compressor (10) of claim 7 wherein a diameter of said at least one hole (162a) is slightly smaller than the width of said annular spaced portion (37).

## Patentansprüche

1. Taumelscheibenkühlkompressor (10) mit:
einem zylindrischen Gehäuse (11) mit einem Zylinderblock (111),
einer vorderen Endplatte (112) und einem Zylinderkopf (113),
einer Kurbelkammer (114), die durch das innere des Gehäuses (11) zwischen dem Zylinderblock (111) und der vorderen Endplatte (112) definiert ist,
einer Mehrzahl von Zylindern (28), in denen entsprechende Kolben (29) durch eine Taumelscheibe (21) hin- und herbewegt werden,
wobei die Taumelscheibe (21) benachbart zu einer geneigten Oberfläche eines Nockenteiles (19) vorgesehen ist, relativ zu der geneigten Oberfläche drehbar ist und von dem Rotorteil (19) angetrieben wird,
das Rotorteil (19) auf einem Wellenteil (15) gesichert ist,
das Wellenteil (15) drehbar in einer ersten Öffnung (112a), die in der Mitte der vorderen Endplatte (112) gebildet ist, durch ein Lagermittel (16) gelagert ist,
das Lagermittel (16) eine Mehrzahl von rollenden Elementen (161), die ringförmig angeordnet sind und eine zylindrische Laufbahn (162), die die äußere Oberfläche der rollenden Elemente (161) bedeckt, aufweist,
gekennzeichnet durch:
mindestens ein Loch (162a), das durch die zylindrische Laufbahn (162) mit Ausnahme der Nähe des vorderen und hinteren Endes der zylindrischen Laufbahn (162) gebildet ist,
mindestens einen Durchgang (360) mit zwei Enden, der innerhalb der vorderen Endplatte (112) gebildet ist,
wobei ein Ende eine zweite Öffnung (361) darstellt, die auf der inneren Oberfläche der vorderen Endplatte (112) vorgesehen ist,
die dem Inneren der Kurbelkammer (114) außerhalb des Rotorteiles (19) zugewandt ist, und das andere Ende eine Öffnung innerhalb der ersten Öffnung (112a) so darstellt, daß die den Durchgang (360) direkt mit dem mindestens einen Loch (162a) verbindet.

2. Kompressor (10) nach Anspruch 1, bei dem das mindestens eine Loch (162a) zylindrisch ist.

3. Kompressor (10) nach Anspruch 2, bei dem der Durchmesser des mindestens einen Loches (162a) 2mm beträgt.

4. Kompressor (10) nach einem der Ansprüche 1 bis 3, bei dem ein ringförmiger raumartiger Abschnitt (37) zwischen einer äußeren Umfangsoberfläche der zylindrischen Laufbahn (162) und einer inneren Umfangsoberfläche der Öffnung (112a) definiert ist,
wobei der mindestens eine Durchgang (360) die zweite Öffnung (361) mit dem ringförmigen raumartigen Abschnitt (37) verbindet.

5. Kompressor (10) nach Anspruch 4, bei dem der ringförmige raumartige Abschnitt (37) eine ringförmige Rille (371) ist, die an der inneren Umfangsoberfläche der Öffnung (112a) gebildet ist.

6. Kompressor (10) nach Anspruch 4 oder 5, bei dem eine Querschnittsansicht des ringförmigen raumartigen Abschnitts (37) rechteckig ist.

7. Kompressor (10) nach Anspruch 6, bei dem der Durchmesser des mindestens einen Loches (162a) im wesentlichen gleich der Breite des ringförmigen raumartigen Abschnittes (37) ist.

8. Kompressor (10) nach Anspruch 7, bei dem der Durchmesser des mindestens einen Loches (162a) geringfügig kleiner als die Breite des ringförmigen raumartigen Abschnittes (37) ist.

## Revendications

1. Compresseur de réfrigérant de type à plateauoscillant (10), comprenant:un carter cylindrique (11) comportant un bloc-cylindres (111),
une plaque d'extrémité avant (112), et une tête de cylindre (113),
une chambre moteur (114) définie par l'intérieur dudit carter (11), entre ledit bloc-cylindres (111) et ladite plaque d'extrémité avant (112),
plusieurs cylindres (28), dans lesquels des pistons(29) sont respectivement animés d'un mouvement alternatif par un organe de plateau oscillant (21),
ledit organe de plateau oscillant (21) étant disposé à côté et de façon rotative par rapport à une surface inclinée d'un organe formant rotor (19), et entraîné par ledit organe formant rotor (19),
ledit organe formant rotor (19) étant fixé sur un organe formant arbre (15),
ledit organe formant arbre (15) étant soutenu pour tourner dans une première ouverture (112a) formée dans le centre de ladite plaque d'extrémité avant (112) par des moyens de roulement (16),
lesdits moyens de roulement (16) comprenant plusieurs éléments roulants (161) disposés de façon annulaire, et une cage cylindrique (162) recouvrant la circonférence externe desdits éléments roulants (161),
caractérisé par
au moins un trou (162a), formé à travers ladite cage cylindrique (162) sauf presque aux extrémités avant et arrière de la cage cylindrique (162),
au moins un passage (360) ayant deux extrémités et étant formé à l'intérieur de ladite plaque d'extrémité avant (112), une extrémité étant une seconde ouverture (361) située sur la surface interne de ladite plaque d'extrémité avant (112) qui est tournée vers l'intérieur de ladite chambre moteur (114), à l'extérieur dudit organe formant rotor (19), l'autre extrémité étant une ouverture située à l'intérieur de ladite première ouverture (112a) de façon à relier directement le passage (360) audit au moins un trou (162a).

2. Compresseur (10) selon la revendication 1, dans lequel ledit au moins un trou (162a) est cylindrique.

3. Compresseur (10) selon la revendication 2, dans lequel le diamètre dudit au moins un trou (162a) est de 2 mm.

4. Compresseur (10) selon l'une quelconque des revendications 1 à 3, dans lequel une partie espacée annulaire (37) est définie entre une surface périphérique externe de ladite cage cylindrique (162) et une surface périphérique interne de ladite ouverture (112a),
ledit au moins un passage (360) reliant ladite seconde ouverture (361) à ladite partie espacée annulaire (37).

5. Compresseur (10) selon la revendication 4, dans lequel ladite partie espacée annulaire (37) est une gorge annulaire (371) formée sur la surface périphérique interne de ladite ouverture (112a).

6. Compresseur (10) selon la revendication 4 ou 5, dans lequel la vue en coupe transversale de ladite partie espacée annulaire (37) est rectangulaire.

7. Compresseur (10) selon la revendication 6, dans lequel le diamètre dudit au moins un trou (162a) est sensiblement égal à la largeur de ladite partie espacée annulaire (37).

8. Compresseur (10) selon la revendication 7, dans lequel le diamètre dudit au moins un trou (162a) est légèrement inférieur à la largeur de ladite partie espacée annulaire (37).
